# FASCICULE DE BREVET EUROPEEN

(11) **EP 0 663 545 B1**
(45) Date de publication et mention de la délivrance du brevet: **04.06.1997**
(21) Numéro de dépôt: 94402921.4
(22) Date de dépôt: 16.12.1994
(51) Int. Cl.: F16H 7/08

(54) **Tendeur hydraulique pour lien sans fin, notamment pour chaîne de transmission de moteur à combustion interne**
Hydraulische Spannvorrichtung für ein endloses Element, insbesondere für eine Treibkette eines Verbrennungsmotors
Hydraulic tensioner for an endless member, particularly for a drive chain of an internal combustion engine

(30) Priorité: 17.01.1994 FR 9400438
(43) Date de publication de la demande: 19.07.1995
(73) Titulaire: SACHS INDUSTRIES S.A. (HURET ET MAILLARD REUNIS), 80210 Chepy (FR)
(72) Inventeur: Jarrand, Patrick, F-38180 Seyssins (FR)
(74) Mandataire: Polus, Camille

(56) Documents cités:
- EP-A- 0 280 600
- EP-A- 0 318 151
- FR-A- 2 516 620
- FR-A- 2 645 931

## Description

La présente invention concerne un tendeur hydraulique pour un lien sans fin, notamment pour une chaîne de transmission de moteur à combustion interne, tel que défini dans le préambule de la revendication 1. Un tel tendeur est connu par FR-A-2 516 620.

On connaît déjà dans l'état de la technique des tendeurs hydrauliques pour chaîne ou autre lien sans fin comme par exemple ceux décrits dans le brevet français FR-2 610 685.

De tels tendeurs comportent un corps délimitant un logement cylindrique, un piston monté coulissant dans le logement et un patin de pression appuyant sur le lien sans fin. Une chambre de haute pression est délimitée par une partie du logement et le piston. La chambre est étanche et est reliée à une source de fluide hydraulique sous pression par l'intermédiaire d'un clapet anti-retour comportant une bille sollicitée en position d'obturation par un ressort.

Lorsque le lien sans fin se détend, la pression exercée par le piston sur le liquide contenu dans la chambre étanche diminue et le clapet, sous la pression exercée par le fluide provenant de la source, s'ouvre pour accroître la pression dans la chambre. Cet accroissement de pression provoque une augmentation du volume de la chambre qui se traduit par un déplacement du piston dans un sens où il tend le lien sans fin jusqu'à un nouvel état d'équilibre assurant une tension prédéterminée de ce dernier.

Dans le cas d'une surpression du lien sans fin sur le patin, le piston ne peut théoriquement pas coulisser dans un sens diminuant le volume de la chambre du fait que celle-ci est étanche et remplie de liquide incompressible, ce qui limite le battement du lien sans fin.

Cependant, le liquide sous pression est constitué généralement par de l'huile minérale dans laquelle est mélangé un peu d'air. Par conséquent, une certaine quantité d'air est introduite avec l'huile sous pression dans la chambre étanche, si bien que le piston peut osciller du fait de la compressibilité de cet air, au risque, lorsque la quantité d'air est importante, de réduire l'efficacité du tendeur pour limiter les battements du lien.

Par ailleurs, l'ouverture du clapet est obtenue lorsque la différence de pression de part et d'autre du clapet dépasse un seuil imposé par la raideur du ressort du clapet, ce qui limite la souplesse d'adaptation du tendeur à des variations de la tension du lien sans fin dues notamment aux battements de ce lien.

FR-A-2 516 620 décrit un tendeur hydraulique pour lien sans fin, notamment pour chaîne de transmission de moteur à combustion interne, du type comportant un corps délimitant un logement cylindrique borgne et un piston monté coulissant dans le logement, destiné à solliciter un patin de pression en contact avec le lien sans fin pour en assurer la tension, le fond du logement comportant un orifice destiné à être relié à une source de liquide sous pression, obturable par des moyens formant clapet anti-retour.

L'invention a pour but de remédier aux inconvénients exposés ci-dessus et de proposer un tendeur hydraulique comportant notamment des moyens simples, fiables et peu coûteux, permettant d'absorber de façon souple les battements du lien sans fin.

A cet effet, l'invention a pour objet un tendeur hydraulique du type précité, caractérisé en ce que les moyens formant clapet anti-retour comprennent une lame élastique, cette lame étant délimitée par une ligne de découpe de contour ouvert ménagée dans un disque maintenu contre le fond du logement par un ressort de compression hélicoïdal agencé dans le logement entre le piston et le disque.

Suivant d'autres caractéristiques de l'invention:
- le ressort de compression comporte une première extrémité logée dans un trou borgne axial du piston, munie de spires de diamètre constant, et une seconde extrémité en contact avec le bord périphérique du disque et la surface latérale du logement, munie de spires de diamètre croissant en s'éloignant de la première extrémité, le tendeur comportant de plus des moyens d'écartement axial minimum de l'extrémité interne au corps du piston et de l'extrémité de plus grand diamètre du ressort ;
- les moyens d'écartement axial minimum comprennent un épaulement de limitation de la course de rentrée du piston ménagé dans la paroi latérale du logement, écarté axialement du fond du logement, destiné à coopérer avec l'extrémité interne du piston ;
- le piston est guidé dans le logement avec un jeu radial formant un passage calibré de liquide sous pression afin d'amortir les oscillations du piston dans le logement ;
- le piston comporte sur sa surface externe au moins un méplat destiné à coopérer avec une butée complémentaire solidaire du corps, faisant saillie à l'intérieur du logement, pour immobiliser ce piston en rotation autour de son axe ;
- le méplat s'étend axialement depuis l'extrémité externe au corps du piston jusqu'à un épaulement ménagé dans le piston perpendiculairement à son axe, destiné à coopérer avec la butée saillante du logement pour limiter la course de sortie du piston ;
- la surface externe du piston est délimitée par une surface cylindrique étagée comportant un épaulement destiné à coopérer avec au moins une butée complémentaire solidaire du corps, faisant saillie à l'intérieur du logement, pour limiter la course de sortie du piston ;
- la butée saillante du logement est délimitée par une goupille cylindrique fixée dans le corps perpendiculairement à l'axe du piston ;
- la butée saillante du logement est délimitée par une saillie venue de matière avec le corps.
- l'extrémité externe au corps du piston est munie d'un perçage calibré communiquant avec le logement permettant, d'une part la projection de liquide sous pression sur le lien sans fin afin de le lubrifier, et d'autre part l'amortissement des oscillations du piston dans le logement.

L'invention sera mieux comprise à la lecture de la description détaillée qui va suivre, faite uniquement à titre d'exemple et en référence aux dessins annexés dans lesquels :
- la figure 1 est une vue en coupe axiale d'un tendeur selon l'invention ;
- la figure 2 est une vue en coupe suivant la ligne 2-2 de la figure 1 ;
- les figures 3 et 4 sont des vues partielles similaires à la figure 1 montrant des variantes de réalisation des moyens de butée de limitation de la course de sortie du piston.

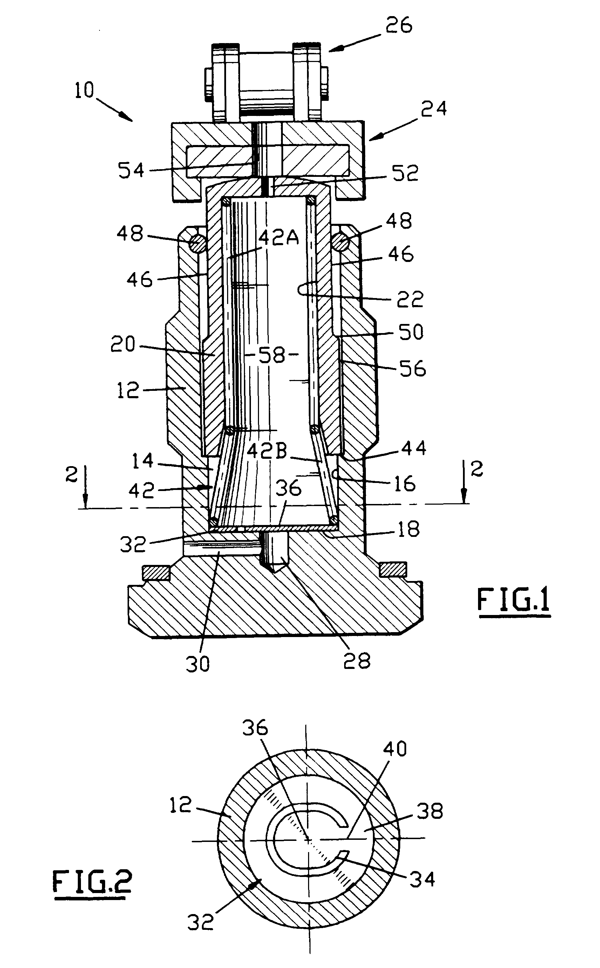

Sur la figure 1, on a représenté un tendeur hydraulique pour un lien sans fin selon l'invention, désigné par la référence générale 10.

Le tendeur 10 comporte un corps 12, de forme générale cylindrique, dans lequel est ménagé un logement axial borgne 14 délimité par une paroi latérale cylindrique 16 et un fond 18.

Un piston 20, de forme générale cylindrique complémentaire de celle du logement 14, est monté coulissant axialement dans ce logement 14. Le piston 20 comporte un alésage axial borgne 22 ouvert à l'extrémité interne au logement du piston.

L'extrémité externe au logement du piston 20 sollicite un patin de pression 24, de type connu, en contact avec le lien sans fin pour en assurer la tension.

Dans l'exemple illustré à la figure 1, le lien sans fin est constitué par une chaîne de transmission 26 pour un moteur à combustion interne, de type connu. Le tendeur 10 et le patin 24 sont montés sur une partie du carter d'une façon connue en soi qui ne sera pas décrite plus en détail.

Le fond 18 du logement comporte un orifice axial 28 destiné à être relié à une source de liquide sous pression tel que de l'huile minérale, notamment par l'intermédiaire d'un canal radial 30 ménagé dans le corps 12. La source de liquide sous pression est constituée par exemple par une pompe à huile du moteur non représentée sur les figures.

Le tendeur 10 comporte également un disque métallique 32 de contour complémentaire à celui du logement 14, en appui par une de ses faces sur le fond 18 de ce dernier.

En se référant à la figure 2, on voit que le disque 32 comporte une ligne de découpe 34 de contour ouvert délimitant une partie centrale du disque formant une lame élastique 36 reliée à la périphérie 38 du disque par une partie de liaison 40.

La lame élastique 36 forme un clapet anti-retour permettant le passage de liquide entre l'orifice 28 et le logement 14 mais empêchant le passage de liquide en sens inverse.

Le disque 32 est maintenu contre le fond 18 du logement par un ressort de compression hélicoïdal 42 agencé dans le logement 14 entre le piston 20 et le disque 32.

Le ressort 42 comporte une première extrémité 42A logée dans l'alésage 22 du piston, munie de spires de diamètre constant, et une seconde extrémité 42B, de forme générale conique, munie de spires de diamètre croissant en s'éloignant de la première extrémité 42A.

L'extrémité conique 42B du ressort permet l'appui de ce dernier sur le bord périphérique 38 du disque et la surface latérale 16 du logement qui sont en retrait radialement par rapport à la surface latérale de l'alésage 22.

Le tendeur 10 comporte de plus des moyens d'écartement axial minimum de l'extrémité interne du piston 20 et de l'extrémité conique 42B du ressort, afin d'éviter notamment l'écrasement de cette extrémité par le piston lors de l'enfoncement de ce dernier dans le logement 14.

Ces moyens d'écartement comprennent un épaulement 44 de limitation de la course de rentrée du piston 20, ménagé dans la paroi latérale 16 du logement 14, écarté axialement du fond 18 du logement, destiné à coopérer avec l'extrémité interne du piston 20, comme cela est représenté sur la figure 1.

En variante, on peut adapter les dimensions du bord périphérique 38 du disque, du logement 14 et l'alésage 22 de manière à remplacer le ressort 42 à extrémité conique par un ressort muni de spires de diamètre constant sur toute sa longueur.

Le piston 20 comporte sur sa surface externe deux méplats 46 diamétralement opposés destinés à coopérer respectivement avec deux goupilles cylindriques 48 fixées dans le corps perpendiculairement à l'axe du piston 20, afin d'immobiliser ce piston en rotation autour de son axe.

Chaque méplat 46 s'étend depuis l'extrémité externe du piston 20 jusqu'à un épaulement 50 ménagé dans ce piston, perpendiculaire à l'axe du piston, formant une butée de limitation de la course de sortie du piston.

En variante, le tendeur 10 peut comporter un seul méplat d'immobilisation en rotation.

Bien entendu, d'autres modes de réalisation des moyens de butée de limitation de la course de sortie du piston peuvent être envisagés sans sortir pour autant du cadre de l'invention.

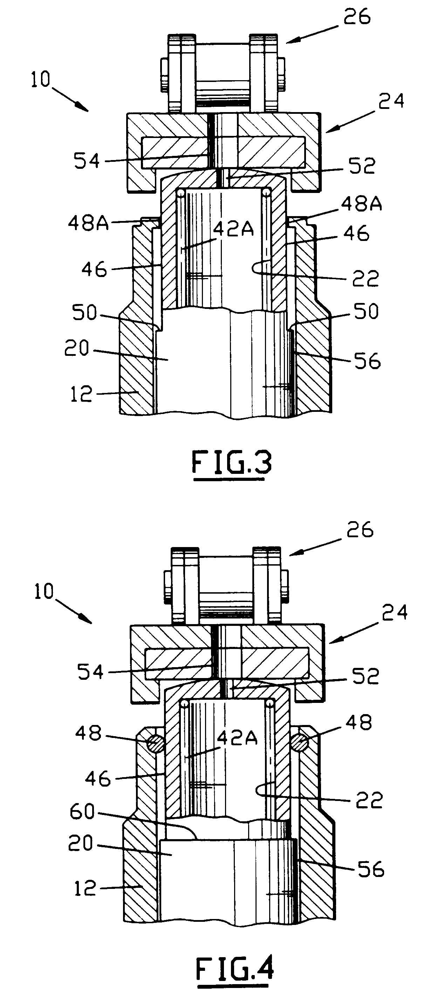

En particulier, des goupilles 48 peuvent être remplacées par des butées 48A faisant saillies à l'intérieur du logement 14, venues de matière avec le corps 12, formées par exemple par repoussage du bord d'extrémité externe de ce corps 12 (voir figure 3).

Dans certaines applications du tendeur selon l'invention, il n'est pas nécessaire d'immobiliser en rotation le piston 20. Dans ce cas, la surface externe du piston 20 est avantageusement délimitée par une surface cylindrique étagée comportant un épaulement 60, le diamètre extérieur de l'extrémité externe du piston 20 étant inférieur à celui du reste du piston (voir figure 4). L'épaulement 60 forme ainsi une butée de limitation de la course de sortie du piston 20 destinée à coopérer avec les goupilles 48 représentées à la figure 4, ou, en variante, les butées 48A représentées à la figure 3.

L'extrémité externe du piston 20 est munie d'un perçage calibré 52 communiquant avec le logement 14 permettant de projeter sur la chaîne 26, à travers un orifice de passage 54 ménagé dans le patin 24, du liquide sous pression pour lubrifier cette chaîne.

Le perçage calibré 52 permet également d'amortir les oscillations du piston 20 dans le logement 14, du fait de l'écoulement de liquide à travers ce perçage, et ainsi d'empêcher les battements de la chaîne 26.

Dans un même but d'amortissement des oscillations du piston 20, ce dernier est guidé dans le logement 14 avec un jeu radial 56 formant un passage annulaire calibré de liquide sous pression.

En variante, le perçage calibré 52 peut être supprimé, le liquide s'écoulant à travers le passage calibré 56 étant utilisé pour lubrifier la chaîne 26.

Le fonctionnement du tendeur 10 est très simple.

Le clapet 36 est ouvert tant que la pression du liquide dans l'orifice d'alimentation 28 est supérieure à celle de la chambre de pression 58 délimitée par la partie du logement 14 communiquant avec l'orifice 28 et l'alésage 22 du piston. Le clapet 36 étant ouvert, le piston 20 coulisse vers l'extérieur jusqu'à ce que le patin 24 vienne au contact de la chaîne 26 à tendre.

Lorsque la chaîne 26 est tendue, celle-ci s'oppose au déplacement du piston 20, si bien que la pression du liquide dans la chambre 58 devient supérieure à celle dans l'orifice d'alimentation 28 provoquant ainsi la fermeture du clapet 36.

En cas de surtension de la chaîne 26, due en particulier à des battements de cette chaîne, le piston 20 peut coulisser légèrement vers l'intérieur du logement 14 du fait de l'écoulement du liquide sous pression à travers le perçage calibré 52 et, à travers le passage calibré 56. Le perçage calibré 52 et le passage calibré 56 permettent donc d'amortir d'éventuels battements de la chaîne.

Lorsque la chaîne 26 se détend, la pression exercée par celle-ci sur le patin 24 diminue, si bien que la pression régnant dans la chambre 58 devient inférieure à la pression régnant dans l'orifice d'alimentation 28 provoquant ainsi l'ouverture du clapet 36 et le coulissement du piston 20 vers l'extérieur jusqu'à ce qu'il retende la chaîne 26 et atteigne un nouvel état d'équilibre.

L'invention comporte de nombreux avantages.

Le fléchissement de la lame élastique 36 formant clapet est proportionnel à la différence de pression exercée sur les faces opposées de cette lame, si bien que le débit d'huile s'écoulant dans la chambre de pression 58 dépend de la différence de pression entre cette chambre et l'orifice d'alimentation 28. Par conséquent, la lame formant clapet permet d'obtenir un effet de régulation de la pression dans la chambre 58, à la différence des tendeurs hydrauliques classiques comportant des clapets à bille et ressort qui ne peuvent s'ouvrir que lorsque la différence de pression de part et d'autre du clapet dépasse un seuil prédéterminé.

L'effet de régulation de la pression dans la chambre 58 par la lame formant clapet permet d'obtenir un écoulement d'huile quasi permanent dans cette chambre 58 et par conséquent une évacuation continue et rapide de l'air mélangé à l'huile à travers le perçage 52 et le passage annulaire 56.

Le poids de la lame formant clapet étant très faible, le temps de réaction du tendeur selon l'invention à des variations opposées de tension du lien sans fin est très réduit, ceci permettant un bon amortissement des battements auxquels est soumis le lien sans fin.

Le clapet formé par une lame découpée dans un disque métallique est très fiable, simple à fabriquer et à monter, et peu coûteux.

Lorsque le liquide sous pression est fourni par la pompe à huile d'un moteur à combustion interne, le clapet du tendeur hydraulique permet d'éviter la vidange de la chambre de pression 58 en cas d'arrêt du moteur et de la pompe à huile.

## Revendications

1. Tendeur hydraulique pour lien sans fin (26), notamment pour chaîne de transmission de moteur à combustion interne, du type comportant un corps (12) délimitant un logement cylindrique borgne (14) et un piston (20) monté coulissant dans le logement (14), destiné à solliciter un patin de pression (24) en contact avec le lien sans fin (26) pour en assurer la tension, le fond (18) du logement comportant un orifice (28) destiné à être relié à une source de liquide sous pression, obturable par des moyens (36) formant clapet anti-retour, caractérisé en ce que les moyens formant clapet anti-retour comprennent une lame élastique (36), cette lame étant délimitée par une ligne de découpe (34) de contour ouvert ménagée dans un disque (32) maintenu contre le fond (18) du logement par un ressort de compression hélicoïdal (42) agencé dans le logement (14) entre le piston (20) et le disque (32).

2. Tendeur hydraulique selon la revendication 1, caractérisé en ce que le ressort de compression (42) comporte une première extrémité (42A) logée dans un trou borgne axial (22) du piston, munie de spires de diamètre constant, et une seconde extrémité (42B) en contact avec le bord périphérique (38) du disque et la surface latérale (16) du logement, munie de spires de diamètre croissant en s'éloignant de la première extrémité (42A), le tendeur comportant de plus des moyens (44) d'écartement axial minimum de l'extrémité interne au corps (12) du piston (20) et de l'extrémité (42B) de plus grand diamètre du ressort (42).

3. Tendeur hydraulique selon la revendication 2, caractérisé en ce que les moyens d'écartement axial minimum comprennent un épaulement (44) de limitation de la course de rentrée du piston (20) ménagé dans la paroi latérale (16) du logement (14), écarté axialement du fond (18) du logement, destiné à coopérer avec l'extrémité interne du piston (20).

4. Tendeur hydraulique selon l'une quelconque des revendications précédentes, caractérisé en ce que le piston (20) est guidé dans le logement (14) avec un jeu radial (56) formant un passage calibré de liquide sous pression afin d'amortir les oscillations du piston (20) dans le logement (14).

5. Tendeur hydraulique selon l'une quelconque des revendications précédentes, caractérisé en ce que le piston (20) comporte sur sa surface externe au moins un méplat (46) destiné à coopérer avec une butée complémentaire (48;48A) solidaire du corps (12), faisant saillie à l'intérieur du logement (14), pour immobiliser ce piston en rotation autour de son axe.

6. Tendeur hydraulique selon la revendication 5, caractérisé en ce que le méplat (46) s'étend axialement depuis l'extrémité externe au corps (12) du piston (20) jusqu'à un épaulement (50) ménagé dans le piston perpendiculairement à son axe, destiné à coopérer avec la butée saillante (48;48A) du logement (14) pour limiter la course de sortie du piston (20).

7. Tendeur hydraulique selon l'une quelconque des revendications 1 à 4, caractérisé en ce que la surface externe du piston (20) est délimitée par une surface cylindrique étagée comportant un épaulement (60) destiné à coopérer avec au moins une butée complémentaire (48; 48A) solidaire du corps (12), faisant saillie à l'intérieur du logement (14), pour limiter la course de sortie du piston (20).

8. Tendeur hydraulique selon l'une quelconque des revendications 5 à 7, caractérisé en ce que la butée saillante du logement (14) est délimitée par une goupille cylindrique (48) fixée dans le corps (12) perpendiculairement à l'axe du piston (20).

9. Tendeur hydraulique selon l'une quelconque des revendications 5 à 7, caractérisé en ce que la butée saillante du logement (14) est délimitée par une saillie (48A) venue de matière avec le corps (12).

10. Tendeur hydraulique selon l'une quelconque des revendications précédentes, caractérisé en ce que l'extrémité externe au corps (12) du piston (20) est munie d'un perçage calibré (52) communiquant avec le logement (14) permettant, d'une part la projection de liquide sous pression sur le lien sans fin (26) afin de le lubrifier, et d'autre part l'amortissement des oscillations du piston (20) dans le logement (14).

## Patentansprüche

1. Hydraulische Spannvorrichtung für ein endloses Element, insbesondere für eine Treibkette eines Verbrennungsmotors, umfassend ein Gehäuse (12), das eine zylindrische Blindaufnahme (14) abgrenzt, und einen Kolben (20), der gleitend in der Aufnahme (14) befestigt ist und dazu dient, einen Druckstempel (24) mit dem endlosen Element (26) in Kontakt zu bringen, um für dessen Spannung zu sorgen, wobei der Boden (18) der Aufnahme eine Öffnung (28) umfaßt, die mit einer Druckflüssigkeitsquelle verbunden wird, welche durch Mittel (36) verschließbar ist, die ein Rückschlagventil bilden, dadurch gekennzeichnet, daß die Mittel, welche das Rückschlagventil bilden, ein elastisches Blatt (36) umfassen, wobei dieses Blatt von einer Schnittlinie (34) mit offenem Umriß begrenzt wird, die in einer Scheibe (32) ausgebildet ist, welche von einer zylindrischen Schraubendruckfeder (42), die in der Aufnahme (14) zwischen dem Kolben (20) und der Scheibe (32) angeordnet ist, gegen den Boden (18) der Aufnahme gehalten wird.

2. Hydraulische Spannvorrichtung nach Anspruch 1, dadurch gekennzeichnet, daß die Schraubendruckfeder (42) ein erstes Ende (42A) umfaßt, das in einem axialen Sackloch (22) des Kolbens angeordnet ist und Windungen mit konstantem Durchmesser aufweist, und ein zweites Ende (42B), das mit dem Umfangsrand (38) der Scheibe und der Seitenfläche (16) der Aufnahme in Kontakt steht und ausgehend von dem ersten Ende (42A) mit Windungen mit zunehmendem Durchmesser versehen ist, wobei die Spannvorrichtung ferner axiale Mindestabstandsmittel (44) zwischen dem inneren Ende des Gehäuses (12) des Kolbens (20) und dem Ende (42B) mit dem größten Durchmesser der Schraubenfeder (42) umfaßt.

3. Hydraulische Spannvorrichtung nach Anspruch 2, dadurch gekennzeichnet, daß die axialen Mindestabstandsmittel einen Ansatz (44) zur Begrenzung des Rückwärtshubs des Kolbens (20) umfassen, der in der Seitenwand (16) der Aufnahme (14) vorgesehen und in Längsrichtung zum Boden (18) der Aufnahme beabstandet ist und zur Zusammenarbeit mit dem inneren Ende des Kolbens (20) bestimmt ist.

4. Hydraulische Spannvorrichtung nach einem der vorangehenden Ansprüche, dadurch gekennzeichnet, daß der Kolben (20) in der Aufnahme (14) mit einem Radialspiel (56) geführt wird, wodurch ein kalibrierter Durchlaß für Druckflüssigkeit gebildet wird, um die Hin- und Herbewegung des Kolbens (20) in der Aufnahme (14) zu dämpfen.

5. Hydraulische Spannvorrichtung nach einem der vorangehenden Ansprüche, dadurch gekennzeichnet, daß der Kolben (20) an seiner außenfläche mindestens eine Abflachung (46) umfaßt, die zur Zusammenarbeit mit einem komplementären Anschlag (48; 48A) bestimmt ist, der einstückig mit dem Gehäuse (12) ausgebildet ist und an der Innenseite der Aufnahme (14) vorsteht, um diesen Kolben an der Drehung um seine Achse zu hindern.

6. Hydraulische Spannvorrichtung nach Anspruch 5, dadurch gekennzeichnet, daß die Abflachung (46) sich in Längsrichtung von dem äußeren Ende des Gehäuses (12) des Kolbens (20) bis zu einem Ansatz (50) erstreckt, der in dem Kolben senkrecht zu seiner Achse vorgesehen ist und für die Zusammenarbeit mit dem vorstehenden Anschlag (48; 48A) der Aufnahme (14) dient, um den Auslaßhub des Kolbens (20) zu begrenzen.

7. Hydraulische Spannvorrichtung nach einem der Ansprüche 1 bis 4, dadurch gekennzeichnet, daß die Außenfläche des Kolbens (20) durch eine abgestufte Zylinderfläche begrenzt ist, die einen Ansatz (60) umfaßt, der zur Zusammenarbeit mit mindestens einem komplementären Anschlag (48; 48A) bestimmt ist, welcher einstückig mit dem Gehäuse (12) ausgebildet ist und im Inneren der Aufnahme (14) vorsteht, um den Auslaßhub des Kolbens (20) zu begrenzen.

8. Hydraulische Spannvorrichtung nach einem der Ansprüche 5 bis 7, dadurch gekennzeichnet, daß der vorstehende Anschlag der Aufnahme (14) durch einen Zylinderstift (48) begrenzt ist, der in dem Gehäuse (12) senkrecht zur Achse des Kolbens (20) befestigt ist.

9. Hydraulische Spannvorrichtung nach einem der Ansprüche 5 bis 7, dadurch gekennzeichnet, daß der vorstehende Anschlag der Aufnahme (14) durch einen Vorsprung (48A) begrenzt ist, der aus einem Stück mit dem Gehäuse (12) besteht.

10. Hydraulische Spannvorrichtung nach einem der vorangehenden Ansprüche, dadurch gekennzeichnet, daß das äußere Ende des Gehäuses (12) des Kolbens (20) mit einer kalibrierten Bohrung (52) versehen ist, die mit der Aufnahme (14) in Verbindung steht und einerseits das Bespritzen des endlosen Elements (26) mit Druckflüssigkeit zu dessen Schmierung ermöglicht und andererseits eine Dämpfung der Hin- und Herbewegung des Kolbens (20) in der Aufnahme (14) ermöglicht.

## Claims

1. Hydraulic tensioner for an endless member (26), particularly for a drive chain for an internal combustion engine, of the type comprising a body (12) defining a cylindrical housing (14) open at one end, and a piston (20) mounted to slide in the housing (14), intended to urge a pressure pad (24) into contact with the endless member (26) in order to ensure that it is tensioned, the base (18) of the housing comprising an aperture (28) intended to be connected to a source of liquid under pressure, closable by means (36) forming a non-return valve, characterised in that the means forming a non-return valve comprise a resilient blade (36), this blade being defined by an open-contoured cut line (34) provided in a disc (32) held against the base (18) of the housing by means of a helical compression spring (42) fitted in the housing (14) between the piston (20) and the disc (32).

2. Hydraulic tensioner according to claim 1, characterised in that the compression spring (42) comprises a first end (42A) lodged in a one-ended axial constant diameter, and a second end (42B) in contact with the peripheral edge (38) of the disc and the lateral surface (16) of the housing, provided with threads of increasing diameter and moving away from the first end (42A), the tensioner in addition comprising means (44) for spreading to a minimum axial extent the internal end on the body (12) of the piston (20), and the end (42B) of the spring (42) with the largest diameter.

3. Hydraulic tensioner according to claim 2, characterised in that the means of minimum axial spreading comprise a shoulder (44) for limiting the return path of the piston (20), and provided in the lateral wall (16) of the housing (14), spread apart axially from the base (18) of the housing, intended to co-operate with the internal end of the piston (20).

4. Hydraulic tensioner according to any one of the preceding claims, characterised in that the piston (20) is guided in the housing (14) with a degree of radial clearance (56), forming a calibrated passage for liquid under pressure in order to damp the oscillations of the piston (20) in the housing (14).

5. Hydraulic tensioner according to any one of the preceding claims, characterised in that the piston (20) comprises, on its external surface, at least one flat (46) intended to co-operate with a complementary stop (48;48A) integral with the body (12), projecting inside the housing (14) in order to immobilise rotation of the piston about its axis.

6. Hydraulic tensioner according to claim 5, characterised in that the flat (46) extends axially from the external end of the body (12) of the piston (20) as far as a shoulder (50) provided in the piston perpendicularly to its axis, intended to co-operate with the projecting stop (48;48A) of the housing (14) in order to limit the outward path of the piston (20).

7. Hydraulic tensioner according to any one of claims 1 to 4, characterised in that the external surface of the piston (20) is defined by a stepped cylindrical surface comprising a shoulder (60) intended to co-operate with at least one complementary stop (48;48A) integral with the body (12), projecting inside the housing (14), in order to limit the outward path of the piston (20).

8. Hydraulic tensioner according to any one of claims 5 to 7, characterised in that the projecting stop on the housing (14) is defined by a cylindrical pin (48) fixed in the body (12) perpendicularly to the axis of the piston (20).

9. Hydraulic tensioner according to any one of claims 5 to 7, characterised in that the projecting stop on the housing (14) is defined by a projection (48A) formed from the material of the body (12).

10. Hydraulic tensioner according to any one of the preceding claims, characterised in that the external end of the body (12) of the piston (20) is provided with a calibrated drilling (52) communicating with the housing (14) enabling on the one hand the projection of liquid under pressure on to the endless member (26) in order to lubricate it, and on the other hand damping of the oscillations of the piston (20) in the housing (14).
